# EUROPEAN PATENT SPECIFICATION

(11) **EP 0 519 722 B1**
(45) Date of publication and mention of the grant of the patent: **20.09.1995**
(21) Application number: 92305606.3
(22) Date of filing: 18.06.1992
(51) Int. Cl.: F16K 7/04, F16L 55/10, A61M 5/175, B25B 5/10

(54) **Pipe closure device**
Rohrabsperreinrichtung
Dispositif d'arrêt pour tuyau

(30) Priority: 21.06.1991 GB 9113501
(43) Date of publication of application: 23.12.1992
(73) Proprietor: FUSION GROUP PLC, Chesterfield, Derbyshire S41 9PZ (GB)
(72) Inventor: Jennings, Peter Michael, Dronfield, Sheffield, S18 6NB (GB)
(74) Representative: Houghton, David

(56) References cited:
- CH-A- 596 958
- DE-A- 2 835 888
- DE-A- 3 324 282
- DE-B- 2 026 127
- FR-A- 2 063 046
- US-A- 2 841 358
- US-A- 2 865 591
- US-A- 2 908 476

## Description

This invention relates to a pipe closure device, and is particularly concerned with a device for the temporary closure of a plastics pipe of a plastics material such as polyethylene.

There is the extensive use of plastics pipes for the carrying of a gas or a liquid, and following the laying of a plastics pipeline, there are those occasions where such as a branch line needs to be connected to a particular point along the laid pipeline, or the need to repair a particular section of the laid pipe.

To close off the supply of gas or liquid at source and to enable appropriate work to be effected at a particular point along the length of the pipeline is frequently impossible, with the attendant need to provide an effective means of temporarily closing a pipeline adjacent to and upstream of the position where an attachment is needed or a repair to be effected.

It is known, e.g. from US Patent 2865591, to effect a temporary closing of a plastics pipe by applying a compressive force to squeeze the pipe flat. However, given the wide variety of pipe wall thicknesses, and given the need to ensure that a pipe is not crushed, means to squeeze a pipe flat as are known are only suited to one pipe wall thickness or must be provided with adjustable stops.

The object of the present invention is to provide a means of effecting a temporary closing of a plastics pipe able to be applied to a range of different pipe wall thickness.

According to the present invention, a means for closing a plastics pipe having a first bar, a second bar in spaced relationship to the first bar, a means at each of said bars for adjusting said bars towards and away from each other, characterised by stop means at each end of said bars for limiting the degree to which said bars can be adjusted towards each other, said stop means on said second bar having a plurality of abutment faces at different heights from the periphery of the surface of said bar, and said adjustment means to one side being disconnectable to allow said second bar to swing about a rotatable connection to the adjustment means to the opposite side of said bars and to be rotated to bring other of its said abutment faces into the operative disposition, and then swing back for reconnection to said adjustment means.

Thus, the stop means on said second bar may be provided with two opposite abutment faces or be of cubic form to provide four abutment faces each of which can be selectively brought into a position where tightening of the adjustment means brings the selected faces on the stop means into contact with the contact faces on the stop means of the first bar to provide four minimum spacings between the bars to enable the closing of two or of four pipes of different wall thickness with the guarantee that the pipe will not be crushed.

To further increase the numbers of pipe wall thicknesses to which the closing means can be applied, the first bar may similarly be provided with stop means to provide two abutment faces or be of cubic form to provide four abutment faces. Thus, the first bar can be relocated on the adjustment means to present any one of its two or of its four abutment faces towards the stop means on the second bar, and hence provide up to four or up to sixteen different minimum spacings between the bars.

The adjustment means to each side may be a threaded rod with a ball to engage in a cavity in the stop means to each side of the lower bar, each abutment face and each outermost end face being slotted to allow the passage of the threaded rod. for ease of production each bar and its stop means may be of identical construction.

Thus, in its first operative condition, the eg wing nuts are slackened, and then swung to bring the screwed rod clear of its respective stop means, and when the second bar can be swung about its ball connection to the other screwed rod. The bars can then be positioned around a pipe and the said second bar swung back to a position where the said one screwed rod can be repositioned through the respective stop means, and the eg wing nuts tightened to cause the compression and closing of the pipe between the bars, without its being crushed.

To accomodate a pipe of a different wall thickness, said one screwed rod can again be disconnected from its stop means, and following swinging of the second bar about the ball on the other screwed rod, the second bar can be rotated about its axis to bring a second pair of abutment faces into an operative position, to allow the bars to be engaged around a pipe of a different wall thickness, and to allow the compression and closing of said different pipe again to allow closing without crushing.

Two embodiments of the invention will now be described with reference to the accompanying drawings, in which:
Figure 1 is a side elevation of a first embodiment of closure means according to the invention;
Figure 2 is an end elevation of the closure means of Figure 1; and
Figure 3 corresponds to Figure 1 but shows a second embodiment of closure means according to the invention.

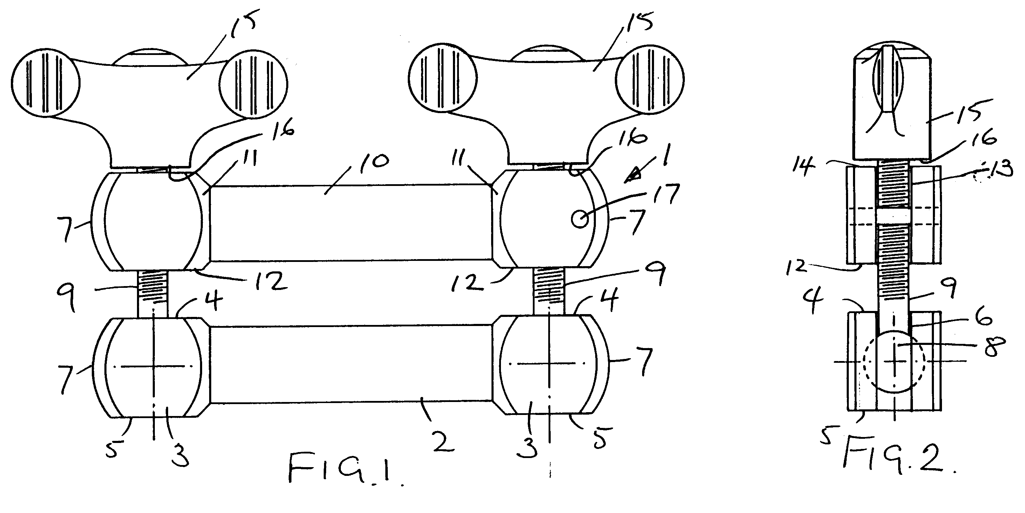

In Figures 1 and 2, a closure means 1 has a bottom bar 2 with a stop means 3 at each end. Each stop means 3 has an abutment face 4 set at one distance from the axis of the bar 2, and a second stop face 5 set at a second distance from said axis and each stop means 3 has a transverse slot 6 extending between the faces 4, 5 and emerging in the outermost face 7. Centrally of each stop means 3 is a spherical cavity, in which is located a ball 8 to which is attached a threaded rod 9.

A second bar 10 is provided with stop means 11 at each end, each stop means having an abutment face 12 at the same distance from the axis of the bar. For ease of production, the bars 2 and 10 are identically formed, hence providing a transverse slot 13 in each stop means 11 extending between the abutment face 12 and an opposite face 14, through which the threaded rods 9 pass, wing nuts 15 being provided each with an end face 16 to contact the respective faces 14 of the stop means 11.

To prevent disengagement of one of the rods 9 from the respective stop means 11, a locking pin 17 is provided.

To locate the closure means on a pipe, each wing nut 15 is unscrewed along but not removed from the rods, to allow one of the rods to be swung about its ball connection 8 to its stop means 3, and when the bar 2 can be swung to put its axis in line with the axis of the tethered rod 9. The bar 2 can then be rotated to put either its faces 4 or its faces 5 into an operative position, selected in accordance with the wall thickness of the pipe to be closed, the bars 2 and 10 then being located to either side of the pipe, the rod 9 swung back to engage in its slot 13 in the stop means 11, and the wing nuts tightened to close the abutment faces 12 on to the abutments faces 4 or 5.

The selection of the face 4 or the face 5 as the operative abutment face enables the closure of a number of pipes of different wall thickness with an assurance that the pipe will not be damaged.

To enable an even greater number of pipe wall thicknesses to be accommodated, the pin 17 can be dispensed with to allow disengagement of the top bar 10 from both rods 9, and the top bar reversed to position the face 16 towards the faces 4 or 5. By having the faces 14 at a different distance from the axis of the bar 10 than the faces 12, yet another range of pipe wall thicknesses can be accommodated.

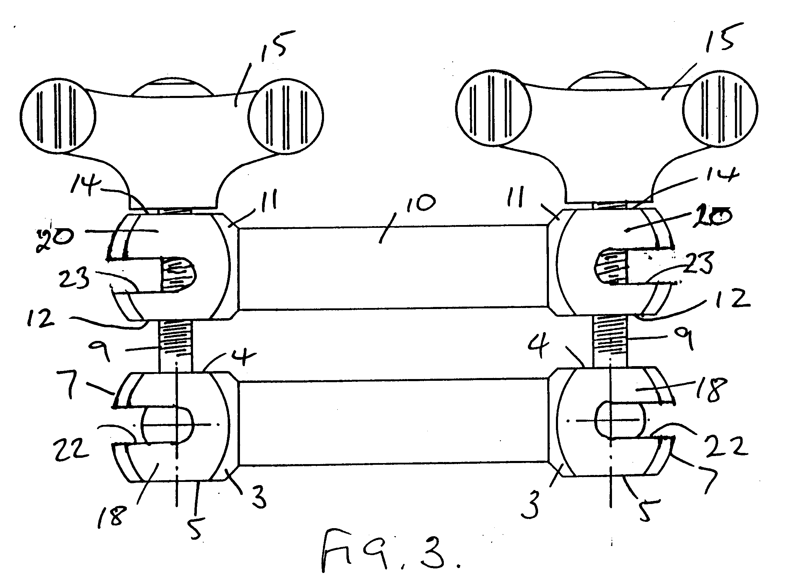

As shown by Figure 3, the ranges of pipe wall thicknesses that can be accommodated by the closure means of the invention, can be maximised by providing opposite faces 18 and 19 on each of the stop means 3 of the bar 2 at different distances from the axis of the bar to each other and to the faces 4 and 5. Similarly the stop means 11 have opposite faces 20 and 21 at different distances from the axis of the bar 10 to each other and to the faces 12 and 14. In the stop means 3 a second transverse slot 22 is provided at 90° to the slot 6 and emerging in the outermost face 7, and in the stop means 11 a second transverse slot 23 is provided at 90° to the slot 13 and emerging in their outermost faces. Thus, each bar has four pairs of abutment faces all at different heights providing sixteen possible settings of the maximum extent to which the bars can be closed on to a pipe.

## Claims

1. A means (1) for closing a plastics pipe comprising a first bar (2) a second bar (10) in spaced relationship to the first bar (2), and a means (9, 15) at the end of said bars (2, 10) for adjusting said bars towards and away from each other, characterised by stop means (3, 11) at each of said bars for limiting the degree to which said bars can be adjusted towards each other, said stop means (3) on said bar (2) having a plurality of abutment faces (4, 5) at different heights from the periphery of the surface of said bar (2), and said adjustment means (9, 15) being disconnectable to allow said bar (2) to swing about a rotatable connection to the adjustment means (9, 15) to the opposite side of said bars and to be rotated to bring other of its said abutment faces into the operative disposition following which the bars are reconnected to said adjustment means.

2. A means as in Claim 1 characterised in that said stop means (3) on said bar (2) is provided with two opposite abutment faces (4, 5).

3. A means as in Claim 1 characterised in that said stop means (3) on said bar (2) is of cubic form to provide four abutment faces (4, 5, 18, 19), each of which can be selectively brought into a position where tightening of the adjustment means (9, 15) brings the selected faces on the stop means (3) into contact with the contact faces (12) on the stop means (11) of the bar (10).

4. A means as in any of Claims 1 to 3 characterised in that to further increase the number of pipe thicknesses to which the closing means can be applied, the bar (10) may be provided with stop means (11) to provide two abutment faces (12, 14).

5. A means as in Claim 4 characterised in that the stop means (11) are of cubic form to provide four abutment faces (12, 14, 20, 21), and whereby the bar (10) can be relocated on the adjustment means (9, 15) to present any one of its four abutment faces towards the stop means (3) on the bar (2).

6. A means as in any of Claims 1 to 5 characterised in that the attachment means (9) are pivotably secured in a respective transverse slot (6) in the stop means (3) and extend disconnectable through a respective transverse slot (13) in the stop means (11).

7. A means as in Claim 6 wherein one attachment means (9) is held against removal from within its transverse slot (13).

8. A means as in Claim 6 wherein a second transverse slot (22, 23) is provided through each stop means (3, 11), at 90° to the first transverse slot (6, 13).

## Patentansprüche

1. Vorrichtung (1) zum Absperren von Kunststoffrohren, bestehend aus einer ersten Stange (2) und einer zweiten Stange (10), die sich zur ersten Stange (2) in einem bestimmten Abstand befindet; und einer Vorrichtung (9, 15) am Ende der besagten Stangen (2, 10), mit deren Hilfe die besagten Stangen aufeinander zu oder voneinander weg bewegt werden können; **gekennzeichnet durch** Stopper (3, 11) an jeder der besagten Stangen zur Begrenzung der Distanz, bis zu der die beiden Stangen aufeinander zu bewegt werden können, wobei die besagten Stopper (3) an der besagten Stange (2) eine Vielzahl von Anschlagflächen (4, 5) mit verschiedenen Höhen in Relation zum Umfang der besagten Stange (2) aufweisen, und wobei die besagten Einstellvorrichtungen (9, 15) so entkuppelt werden können, daß die besagte Stange (2) um ein Drehgelenk an den jeweils entgegengesetzten Seiten der besagten Stangen geschwenkt und so gedreht werden kann, daß jeweils die gewünschte der zur Verfügung stehenden besagten Anschlagflächen die Anschlagfunktion übernimmt, woraufhin die Stange wieder mit der besagten Einstellvorrichtung verbunden wird.

2. Vorrichtung nach Anspruch 1, dadurch gekennzeichnet, daß der besagte Stopper (3) an der besagten Stange (2) mit zwei auf entgegengesetzten Seiten angeordneten Anschlagflächen (4, 5) ausgestattet ist.

3. Vorrichtung nach Anspruch 1, dadurch gekennzeichnet, daß der besagte Stopper (3) an der besagten Stange (2) die Form eines Kubus hat und auf diese Weise vier Anschlagflächen (4, 5, 18, 19) aufweist, wobei jede dieser Flächen in eine Position gedreht werden kann derartig, daß beim Anziehen der Einstellvorrichtung (9, 15) die am Stopper (3) ausgewählten Anschlagflächen in Kontakt mit den Flächen (12) des Stoppers (11) der oberen Stange (10) kommt.

4. Vorrichtung nach einem der Ansprüche 1 bis 3, dadurch gekennzeichnet, daß im Sinne einer größeren Anzahl unterschiedlicher Rohrdurchmesser, für die vorliegende Absperrvorrichtung geeignet ist, die Stange (10) mit Stoppern (11) ausgestattet werden kann, die zwei Anschlagflächen (12, 14) aufweisen.

5. Vorrichtung nach Anspruch 4, dadurch gekennzeichnet, daß der Stopper (11) die Form eines Kubus hat und auf diese Weise vier Anschlagflächen (12, 14, 20, 21) aufweist; wobei die Stange (10) an der Einstellvorrichtung (9, 15) so umpositioniert werden kann, daß jede gewünschte der vier Anschlagflächen in Richtung des Stoppers (3) der Stange (2) zeigt.

6. Vorrichtung nach Anspruch 1 bis 5, dadurch gekennzeichnet, daß die Einstellvorrichtung (9) sich schwenkbar innerhalb eines Querschlitzes (6) im Stopper (3) befindet und über einen Querschlitz (13) im Stopper (11) nach außen geschwenkt werden kann.

7. Vorrichtung nach Anspruch 6, wobei eine Einstellvorrichtung (9) innerhalb des Querschlitzes (13) gegen eine Schwenkbewegung nach außen gesichert ist.

8. Vorrichtung nach Anspruch 6, wobei ein zweiter Querschlitz (22, 23) in jedem Stopper (3, 11) angebracht ist, der sich in einen Winkel von 90° zum ersten Querschlitz (6, 13) befindet.

## Revendications

1. Moyen d'obturation d'un tuyau en plastique, comprenant une première barre (2), une deuxième barre (10) espacée de la première barre (2), et des moyens (9, 15) placés à l'extrémité des barres (2, 10), destinés à régler la position des barres afin de les rapprocher ou de les éloigner l'une de l'autre, caractérisé par des moyens de butée (3, 11) placés à l'extrémité des barres afin de limiter l'amplitude selon laquelle les barres peuvent être rapprochées l'une de l'autre, les moyens de butée (3) présents sur la barre (2) possédant une pluralité de faces de butée (4, 5) à différentes hauteurs de la périphérie de la surface de la barre (2), et les moyens de réglage (9, 15) pouvant être désassemblés afin de permettre à la barre (2) de pivoter autour d'une connexion rotative avec les moyens de réglage (9, 15) du côté opposé des barres, et d'être amenée à tourner afin d'amener certaines autres de ses faces de butée dans la position de fonctionnement, à la suite de quoi les barres sont à nouveau connectées avec les moyens de réglage.

2. Moyen selon la revendication 1, caractérisé en ce que les moyens de butée (3) sur la barre (2) présentent deux faces de butée (4, 5) opposées.

3. Moyen selon la revendication 1, caractérisé en ce que les moyens de butée (3) présents sur la barre (2) sont de forme cubique afin de constituer quatre faces de butée (4, 5, 18, 19), dont chacune peut être amenée dans une position dans laquelle le serrage des moyens de réglage (9, 15) amène les faces sélectionnées sur les moyens de butée (3) en contact avec les faces de contact (12) présentes sur les moyens de butée (11) de la barre (10).

4. Moyen selon l'une quelconque des revendications 1 à 3, caractérisé en ce qu'afin d'augmenter encore le nombre d'épaisseurs de tuyaux auquel les moyens d'obturation peuvent être appliqués, la barre (10) peut être équipée de moyens de butée (11) afin de constituer deux faces de butée (12, 14).

5. Moyen selon la revendication 4, caractérisé en ce que les moyens de butée (11) sont de forme cubique afin de constituer quatre faces de butée (12, 14, 20, 21), la barre (10) pouvant être déplacée sur les moyens de réglage (9, 15) afin de présenter l'une quelconque de ses quatre faces de butée en direction des moyens de butée (3) présents sur la barre (2).

6. Moyen selon l'une quelconque des revendications 1 à 5, caractérisé en ce que les moyens de fixation (9) sont fixés de façon pivotante dans une fente transversale (6) respective ménagée dans les moyens de butée (3) et s'étendent, de façon détachable, à travers une fente transversale (13) respective ménagée dans les moyens de butée (11).

7. Moyen selon la revendication 6, caractérisé en ce qu'un moyen de fixation (9) est maintenu pour ne pas être dégagé de sa fente transversale (13).

8. Moyen selon la revendication 6, caractérisé en ce qu'une deuxième fente transversale (22, 23) est prévue à travers chaque moyen de butée (3, 11), à 90° par rapport à la première fente transversale (6, 13).
